# EUROPEAN PATENT APPLICATION

(11) **EP 1 385 332 A2**
(43) Date of publication of application: **28.01.2004**
(21) Application number: 03254680.6
(22) Date of filing: 25.07.2003
(51) Int. Cl.: H04N 5/00, H04N 7/24

(54) **Information storage medium storing information for generating DTV stream, and method and apparatus for converting DTV stream**

(30) Priority: 26.07.2002 KR 2002044302
(71) Applicant: SAMSUNG ELECTRONICS CO., LTD., Suwon-City, Kyungki-do (KR)
(72) Inventor: Lee, Jae-sun, Osan-si Gyeonggi-do (KR); Ko, Jung-wan, 315-401 Daewoo Apt., Paldal-Gu Suwon-si Gyeonggi-do (KR); Park, Sung-wook, 4-1103 Mapo Hyundai Apt., Mapo-gu (KR); Chung, Hyun-kwon, Seoul (KR)
(74) Representative: Robinson, Ian Michael

(57) **Abstract**

An information storage medium storing information for generating digital television (DTV) streams, and a method and an apparatus for converting DTV streams are provided. The information storage medium includes multi-streams (21); interactive contents (22) including information that enables interface with a user; and reproduction control information (23) including conversion information for converting the multi-streams (21) and/or the interactive contents (22) into digital television (DTV) streams.

## Description

The present invention relates to an information storage medium storing information for generating digital television (DTV) streams, and a method and an apparatus for converting DTV streams, and more particularly, to an information storage medium storing multi-streams, interactive contents, and reproduction control information, and a method and an apparatus for converting information recorded on an information storage medium into bit-streams reproducible in a DTV.

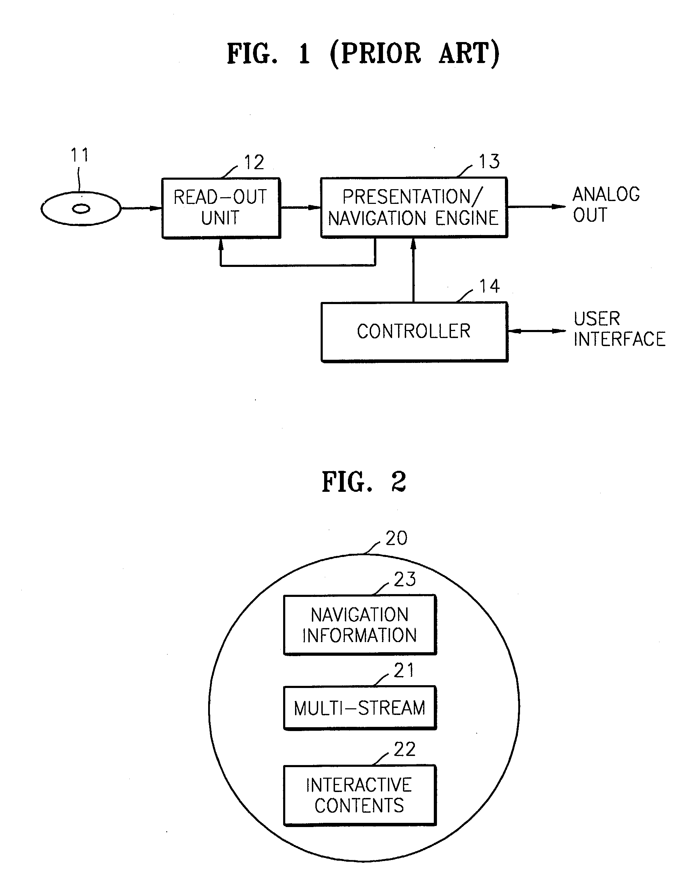

Since a conventional read-only memory (ROM) type information storage medium such as a digital versatile disc-video (DVD-video) disc, and a reproducing apparatus therefore, do not include data, information structure, and devices that can be reproduced in a DTV, the information recorded on the storage medium cannot be reproduced in a DTV. A block diagram of a DVD-video reproducing apparatus is shown in Figure 1.

Referring to Figure 1, a DVD-video reproducing apparatus is formed of a read-out unit 12 that reads out data from an optical disc 11, for example, a DVD-video disc, and a controller 14 that receives user commands via a user interface and provides a command control signal to a presentation/navigation engine 13. Here, the presentation/navigation engine 13 includes a navigation engine, which parses and executes reproduction control information that manages the user interface, and reproduces sequences read out from the optical disc 11 using the read-out unit 12, and a presentation engine, which decodes main bit streams and interactive contents read out from the optical disc 11 using a selected reproducing sequence. In other words, the navigation engine manages the user interface and the reproducing sequence, and the presentation engine decodes and reproduces multi-stream and interactive contents, which are represented as titles or programs, selected by the navigation engine.

Here, the conventional ROM-type information storage medium, such as the DVD-video disc, follows a standard that is independent from the data of DTV. Thus, when the information recorded on the ROM-type information storage medium is provided to the DTV by using a digital interface, the information should be converted into bit streams having an information structure that can be parsed and presented by the DTV. However, the conventional ROM-type information storage medium does not have the proper data type or information structure to be reproduced on the DTV. Thus, it is impossible to convert the data recorded on the ROM-type information storage medium into signals that can be reproduced on the DTV, in a conventional reproducing apparatus that reproduces the conventional ROM-type information storage medium.

According to the present invention there is provided an apparatus and method as set forth in the appended claims. Preferred features of the invention will be apparent from the dependent claims, and the description which follows.

The present invention provides an information storage medium storing multi-streams, interactive contents, and reproduction control information including conversion information for converting the data into multi-streams and the interactive contents into digital television (DTV) streams.

The present invention also provides a method and an apparatus for converting data recorded on an optical disc storing multi-streams, interactive contents, and reproduction control information into streams that can be reproduced on a DTV, i.e., DTV streams.

According to an aspect of the present invention, there is provided an information storage medium comprising multi-streams, interactive contents including information that enables interface with a user, and reproduction control information including conversion information for converting the multi-streams and/or the interactive contents into digital television (DTV) streams.

According to another aspect of the present invention, there is provided a method for reproducing data recorded on an information storage medium on a DTV, the method comprising reading out multi-streams, interactive contents, and reproduction control information from the information storage medium including the multi-streams, the interactive contents, and the reproduction control information having conversion information for converting the multi-streams and/or the interactive contents into DTV streams; converting the read-out multi-streams into transport streams appropriate to the DTV; converting the read-out interactive contents into DTV interactive contents; and multiplexing the transport streams and the DTV interactive contents based on the read-out reproduction control information to generate DTV streams.

According to yet another aspect of the present invention, there is provided an optical recording/reproducing apparatus for reproducing data recorded on an information recording medium on a DTV, the apparatus comprising a read-out unit that reads out multi-streams, interactive contents, and reproduction control information from the information storage medium that includes the multi-streams, the interactive contents, and the reproduction control information having conversion information for converting the multi-streams and/or the interactive contents into DTV streams; a first transcoder that converts the multi-streams read-out by the read-out unit into transport streams appropriate to the DTV; a second transcoder that converts the interactive contents read out by the read-out unit into DTV interactive contents; and a generator that multiplexes the outputs of the first and second transcoders and generates DTV streams according to the reproduction control information read out by the read-out unit.

For a better understanding of the invention, and to show how embodiments of the same may be carried into effect, reference will now be made, by way of example, to the accompanying diagrammatic drawings in which:
Figure 1 is a block diagram illustrating a conventional DVD-video reproducing apparatus;
Figure 2 is a reference diagram illustrating data recorded on an information storage medium, according to an embodiment of the present invention;
Figure 3 is a block diagram illustrating an apparatus for converting DTV streams, according to an embodiment of the present invention;
Figure 4 is a detailed block diagram illustrating a first transcoder of Figure 3, according to an embodiment of the present invention; and
Figures 5A and 5B are reference diagrams illustrating an example of converting an MPEG-PS input to a first transcoder of Figure 4 into an MPEG-TS.

Figure 2 is a block diagram illustrating data recorded on an information storage medium according to the present invention. Referring to Figure 2, the data recorded on an optical disc 20 is formed of multi-streams 21, interactive contents 22, and navigation information 23, as separate streams. Here, the multi-streams 21 denote audio and/or video (AV) stream and subpicture data. The AV stream may have a transport format, for example, moving picture experts group-2 program stream (MPEG-2 PS), MPEG-4, MPEG-7, and wavelet transform. The interactive contents 22 where interfacing with users is important denotes markup document files, such as HTML, XHTML, and XML, and files included in the markup document files, such as joint photographic experts group (JPEG) and portable network graphics (PNG) files. The navigation information 23, i.e., reproduction control information, includes reproduction information including management information and search information for reproducing the multi-streams 21 and the interactive contents 22, and conversion information for converting the multi-streams 21 and the interactive contents 22 into DTV streams. The navigation information 23 also includes information on the relationship between the multi-streams 21 and the interactive contents 22 in order for the multi-streams 21 and the interactive contents 22 to be converted synchronously and in relation to each other. In addition, the navigation information 23 includes information for distinguishing the multi-streams 21 from the interactive contents 22 and control information for controlling the generation of the DTV streams.

In other words, the navigation information 23 includes: information on the types of the multi-streams and the interactive contents, time information for synchronously reproducing and synchronously converting the multi-streams and the interactive contents, time information for independently reproducing and independently converting the multi-streams and the interactive contents, parental ranking information on the multi-streams and the interactive contents, information on the start time, reproduction period, and titles of the multi-streams and the interactive contents, and information on the detailed descriptions of the multi-streams and the interactive contents.

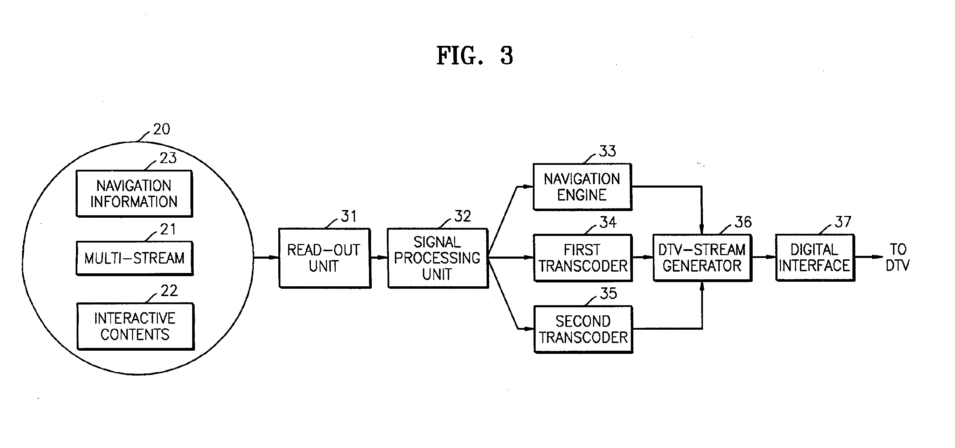

Figure 3 is a block diagram illustrating an apparatus for converting DTV streams, according to an embodiment of the present invention.

Referring to Figure 3, a read-out unit 31 reads out information on the optical disc 20, i.e., the multi-streams 21, the interactive contents 22, and the navigation information 23, and provides the information to a signal processing unit 32. The signal processing unit 32 processes the read-out information into reproduction signals to transfer the navigation information 23, the multi-streams 21, and the interactive contents 22 to a navigation engine 33, a first transcoder 34, and a second transcoder 35, respectively. The navigation engine 33 controls a DTV stream generator 36 based on the navigation information provided from the signal processing unit 32.

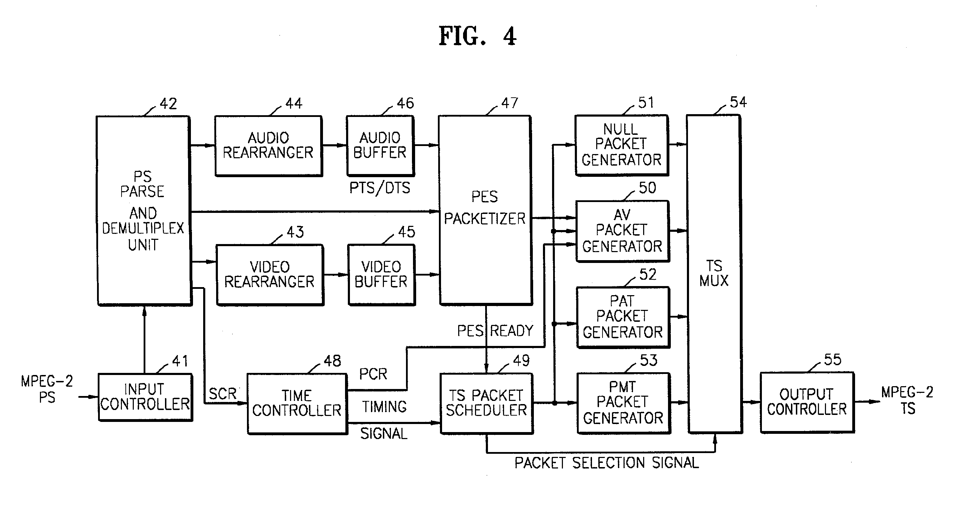

The first transcoder 34 converts the multi-streams 21 provided from the signal processing unit 32 into an MPEG-2 TS. The structure of the first transcoder 34 that converts the MPEG-2 PS into the MPEG-2 TS will be described later with reference to Figure 4.

The second transcoder 35 converts the interactive contents 22 read out by the read-out unit 31 into DTV interactive contents. The process of converting the HTML document as a source document into a DTV-HTML document in the second transcoder 35 is as follows.

step 1: the validation of the source document, for example, the HTML document, is checked.

step 2: if the source document is validated, comments, process indicators, document type declarations, start tags, end tags, named character references, numeric character references, marked sections, and parsed character data (#PCDATA) contents in the source document are converted according to a DTV-HTML format. Thereafter, the converted values are output to a target document, i.e., the DTV-HTML document. In this case, open elements, which do not have the start tags or the end tags, maintain a stack during steps 1 and 2 in order to apply the start tags or the end tags that are omitted in the source document.

An example of the HTML document recorded on the disc is as follows.

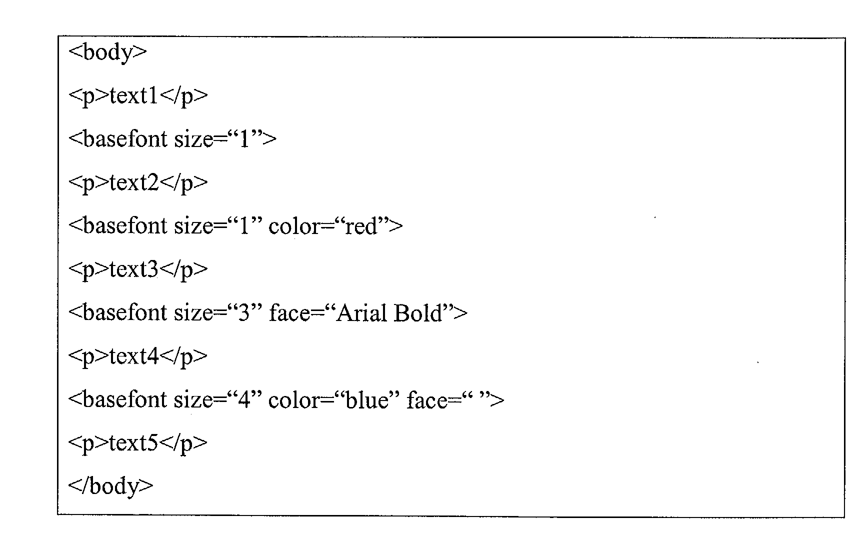

An example of the DTV-HTML document that is obtained by performing steps 1 and 2 on the HTML document recorded on the optical disc, in the second transcoder 35, is as follows.

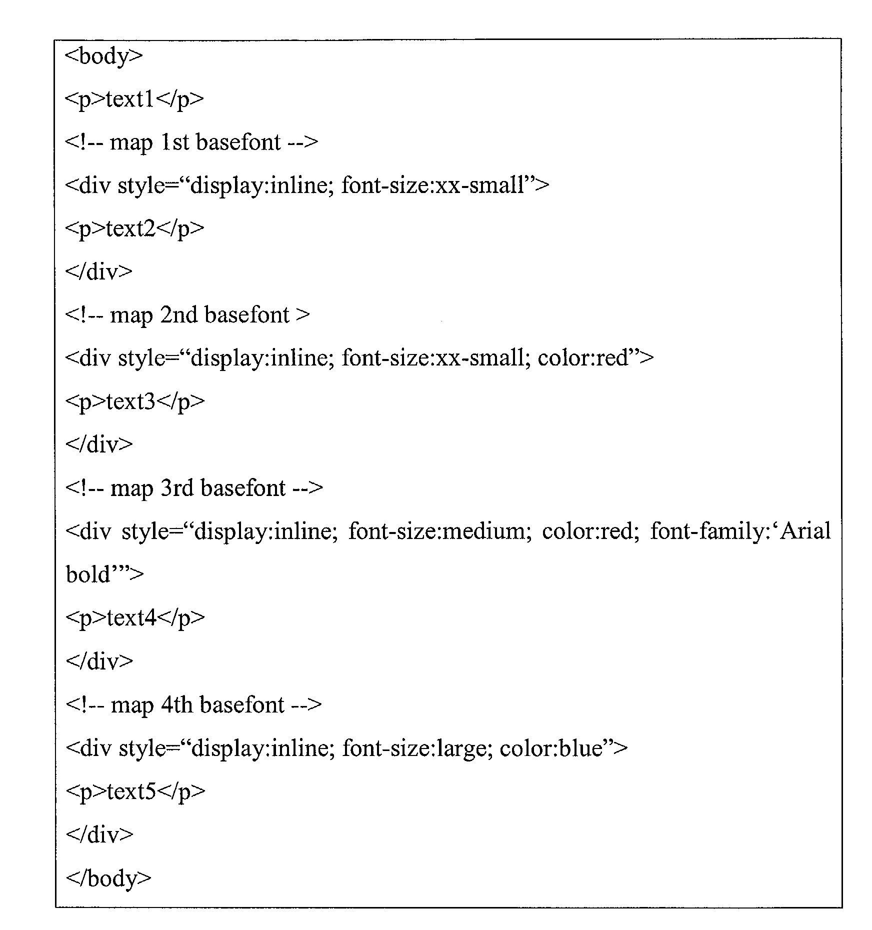

The DTV stream generator 36 generates DTV streams by using the MPEG-2 TS stream generated in the first transcoder 34 and the DTV-HTML data generated in the second transcoder 35, based on the conversion information provided from the navigation engine 33. In addition, the DTV stream generator 36 transfers the DTV streams to a DTV via a digital interface 37 that enables data to be input bidirectionally. An example of the digital interface 37 includes an IEEE 1394 interface.

The DTV stream generator 36 converts the data generated in the second transcoder 35, for example, the DTV-HTML data, into data following a digital storage media command and control (DSM-CC) standard to generate a DSM-CC message. In addition, the DTV stream generator 36 forms program and system information protocol (PSIP) information by using the conversion information, and program association table (PAT) information and program map table (PMT) information generated in the first transcoder 34. Here, the conversion information for converting the data into the DTV streams is included in the navigation information 23 provided from the navigation engine 33. The generated PSIP information is converted into a private section. Thereafter, the PSIP private section and the DSM-CC message are multiplexed with the MPEG-2 TS so that the DTV streams are generated.

In addition, the PSIP, a standard defined by the advanced television system committee (ATSC), is used to transfer information on the MPEG-2 transport stream and an electronic program guide (EPG). Tables defined by the PSIP are formed based on the standard of a private table that is defined in the MPEG-2 system. In addition, the tables are multiplexed with the A/V data that composes a program to be transferred.

The tables defined in the PSIP are as follows: a system time table (STT) used for transferring current date and time; a master guide table (MGT) including the versions and the TS packet identifiers of the tables to be transferred; a virtual channel table (VCT) formed by extending a program connection table of the MPEG-2 system to provide the names and carrier frequencies of channels; an event information table (EIT) used for guiding information on programs currently broadcast on virtual channels or to be broadcast; and an extended text table (ETT) for transferring additional information on the programs included in the EIT.

On the other hand, the DSM-CC is a standard defined by the MPEG in order to remotely control multimedia service. The systems controlled by the DSM-CC are divided into a user system with a client and a server, and a network system including a service and resource manager (SRM). Here, the interfaces between the user system and the network system defined by the DSM-CC include a user-to-user (UU) interface and a user-to-network (UN) interface. In the DSM-CC standard, the requirements of a physical layer, a data link layer, a transport layer, and a remote procedure call (RPC) layer that are related to the transfer are defined.

Messages transferred between the UU interface and the UN interface are formed of a typical message header and a message including contents. A UU message includes an RPC message and a session control message, and a UN message includes a network set message, a service and resource management message, and a download message. Here, the UN download message can be used to transfer additional data that is used for a data broadcasting. Methods of transferring the UN download message include a flow-controlled download method, a non-flow-controlled download method, and a data carousel method. Here, the flow-controlled download method transfers all of the data from one server to one client, and the non-flow-controlled download method transfers all of the data from one server to a plurality of clients. In the data carousel method, one server periodically transfers data and each client receives necessary portions of the data. Among the methods of transferring the UN download message, the non-flow-controlled method and the data carousel method are used for data broadcasting, based on the ATSC.

Figure 4 is a detailed block diagram illustrating the first transcoder 34 of Figure 3, according to an embodiment of the present invention. Here, the MPEG-2 PS is converted into the MPEG-2 TS.

Referring to Figure 4, if the multi-streams 22 read out by the read-out unit 31 are the MPEG-2 PS, an input controller 41 receives the PS data via the signal processing unit 32 of Figure 3. Here, the input controller 41 includes a buffer to disenable the PS data when the buffer level is very low. In addition, an output controller 55 controls the MPEG-2 TS output according to the level of an internal buffer.

A PS parse and demultiplex unit 43 parses the packet and the packetized elementary stream (PES) of the PS data provided via the input controller 41. The PS parse and demultiplex unit 42 extracts a video elementary stream (ES) and an audio ES from the PS data. The PS parse and demultiplex unit 42 extracts a system clock reference (SCR) from the packet to provide to a time controller 48, and extracts presentation time stamp/decoding time stamp (PTS/DTS) from a PES header to provide to a PES packetizer 47.

A video rearranger 42 searches a sequence start code and a picture start code from the video ES that is output from the PS parse and demultiplex unit 42 to generate recognition signals by access unit. Here, if the PTS/DTS are present, the PTS/DTS are recorded in an internal register.

An audio rearranger 44 obtains the frame size of the audio ES output from the PS parse and demultiplex unit 42 based on audio synchronization information, and generates recognition signals by access unit. Here, when the PTS is present in the audio ES, the PTS is recorded in an internal register. A video buffer 45 and an audio buffer 46 store the outputs of the video rearranger 43 and the audio rearranger 44, respectively. Here, the video buffer 45 and the audio buffer 46 may store 184 bytes that is a maximum payload of the TS packet.

The PES packetizer 47 assigns the PES header to the outputs of the video buffer 45 and the audio buffer 46 by access unit based on the recognition signals that are generated in the video rearranger 43 and the audio rearranger 44. Thereafter, the PES packetizer 47 provides a control signal PES READY to a TS packet scheduler 49 after inserting proper time stamps into the outputs of the video buffer 45 and the audio buffer 46. A time controller 48 sets an internal timer by using the SCR value of an initial pack that is provided from the PS parse and demultiplex unit 42. Thereafter, the time controller 48 generates a time control signal that determines the time alignment of an AV packet generator 50 by using a sequential SCR value, based on the SCR value of the initial pack. In other words, when the current count value counted by the timer is equal to or larger than the SCR value, the AV packet generator 50 is enabled. In another case, the AV packet generator 50 is disabled until the counted value becomes equal to the SCR value. In addition, a program clock reference (PCR) that is generated using the SCR value in the timer of the time controller 48 is sampled to generate and provide a period signal of a program specific information (PSI) packet to the TS packet scheduler 49. Furthermore, a period signal of PCR insertion is generated and provided to the AV packet generator 50.

The TS packet scheduler 49 schedules AV packets generated by the AV packet generator 50, Null packets generated by a Null packet generator 51, PAT packets generated by a PAT packet generator 52, and PMT packets generated by a PMT packet generator 53. Here, the priority of the packets is the AV packets > the PAT packets and the PMT packets > the Null packets. In this case, the time adjustment of the AV packets is determined according to the presence of the time control signal generated by the time controller 48. In addition, the TS packet scheduler 49 alternately schedules the PAT packets and the PMT packets whenever the PSI period signals are generated in the time controller 48. Furthermore, a TS multiplexer (TS MUX) 54 multiplexes the AV packets, the PAT packets, the PMT packets, and the Null packets according to the signal provided from the TS packet scheduler 49 and outputs the MPEG-2 TS via the output controller 55.

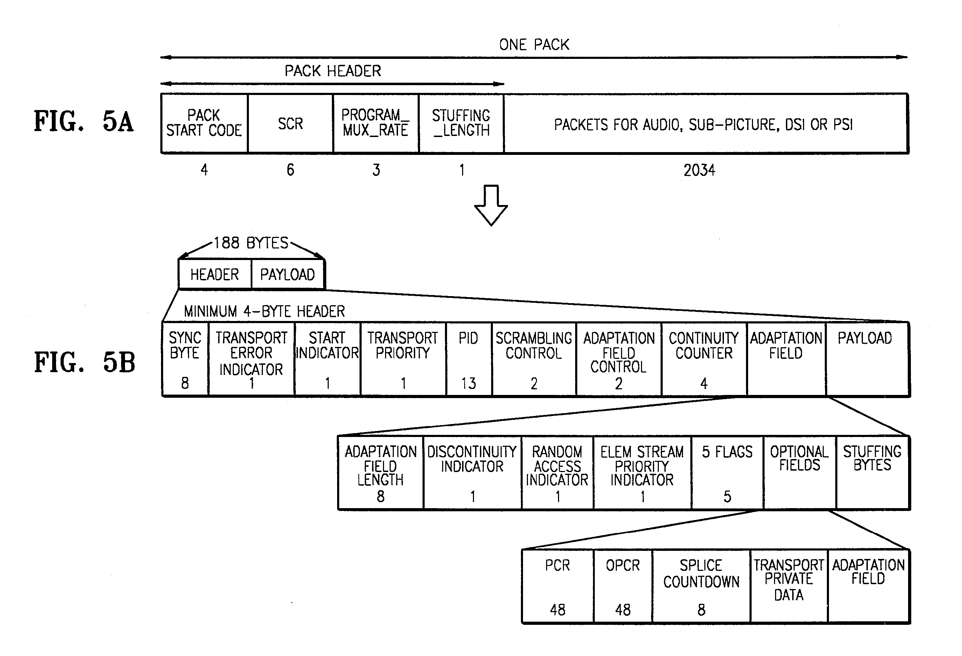

Figures 5A and 5B are reference diagrams illustrating an example of converting the MPEG-PS into the MPEG-TS by the first transcoder 34 of Figure 4. Here, the MPEG-PS of pack unit is formed of a pack header, and packets for video, audio, sub-picture, and decoding specific information (DSI) or PSI, as shown in Figure 5A. The MPEG-TS output from the first transcoder 34 is formed of the TS packet of 188 bytes including a header and a payload, as shown in Figure 5B. The structure and the contents of the header are shown in Figure 5B, so descriptions of the structure and the contents of the header will be omitted.

As described above, the present invention provides an information storage medium including multi-streams, interactive contents, and reproduction control information having information on generation of DTV streams. In addition, according to the present invention, information recorded on the information storage medium according to a standard which is not related to DTV data, can be reproduced on a DTV by converting the multi-streams and the interactive contents into DTV streams by using the reproduction control information on the information storage medium.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium comprising:
multi-streams (21);
interactive contents (22) including information that enables interface with a user; and
reproduction control information (23) including conversion information for converting the multi-streams (21) and/or the interactive contents (22) into digital television (DTV) streams.

2. The information storage medium of claim 1, wherein the multi-streams (21) include a moving picture experts group-2 program stream (MPEG-2 PS), an MPEG-4 format stream, an MPEG-7 format stream, and/or a Wavelet transform format stream.

3. The information storage medium of claim 1 or 2, wherein the reproduction control information (23) further includes:
identification information, which identifies the multi-streams (21) from the interactive contents (22) to perform a DTV stream conversion; and
control information, which controls the generation of the DTV streams.

4. The information storage medium of any preceding claim, wherein the reproduction control information (23) further comprises management information and search information for reproducing the multi-streams (21) and the interactive contents (22).

5. The information storage medium of claim 4, wherein the reproduction control information (23) further comprises:
information on the types of the multi-streams (21) and the interactive contents (22);
time information for synchronously reproducing and synchronously converting the multi-streams (21) and the interactive contents (22);
time information for independently reproducing and independently converting the multi-streams (21) and the interactive contents (22) ;
parental ranking information on the multi-streams (21) and the interactive contents (22);
additional information on the start times, the reproduction periods, and the titles of the multi-streams (21) and the interactive contents (22); and
information for detailed descriptions of the multi-streams (21) and the interactive contents (22).

6. A method for reproducing data recorded on an information storage medium on a DTV, the method comprising:
reading out multi-streams (21), interactive contents (22), and reproduction control information (23) from the information storage medium including the multi-streams (21), the interactive contents (22), and the reproduction control information (23) having conversion information for converting the multi-streams (21) and/or the interactive contents (22) into DTV streams;
converting the read-out multi-streams (21) into transport streams appropriate to the DTV;
converting the read-out interactive contents (22) into DTV interactive contents (22); and
multiplexing the transport streams and the DTV interactive contents (22) based on the read-out reproduction control information (23) to generate DTV streams.

7. The method of claim 6, wherein the multi-streams (21) include an MPEG-2 PS, an MPEG-4 format stream, an MPET-7 format stream, and/or a Wavelet transform format stream.

8. The method of claim 7, wherein the MPEG-2 PS is converted into an MPEG-2 TS during the conversion of the transport streams.

9. The method of claim 8, wherein converting the transport streams comprises:
parsing a pack and a packetized elementary stream (PES) of read-out PS data to extract a video elementary stream (ES) and an audio ES, to extract a system clock reference (SCR) from the pack, and to extract presentation time stamp/decoding time stamp (PTS/DTS) from a PES header;
assigning the PES header to the video ES and the audio ES and inserting a proper time stamp based on the PTS/DTS;
setting an internal timer to be an SCR value of an initial pack, generating a time control signal by determining a time alignment based on an SCR value of a sequential pack, and sampling a program clock reference (PCR) obtained using the SCR to generate a program specific information (PSI) packet period signal and a PCR insertion period signal;
generating AV packets using the result of inserting the time stamp according to the PCR insertion period signal, and generating program association table (PAT) packets, program map table (PMT) packets, and Null packets;
properly scheduling the AV packets, the PAT packets, the PMT packets, and the Null packets, while the time control of the AV packets is determined based on the presence of the time control signal, and the PAT packets and the PMT packets are alternately scheduled whenever the PSI packet period signals are generated; and
multiplexing the AV packets, the PAT packets, the PMT packets, and the Null packets to generate the MPEG-2 TS.

10. The method of any of claims 6 to 9, wherein converting the DTV interactive contents (22) comprises:
checking the validation of the interactive contents (22), i.e., a source document, that is recorded on the information storage medium; and
when it is determined that the source document is validated, converting comments, process indicators, document type declarations, start tags, end tags, named character references, numeric character references, marked sections, and parsed character data in the source document into a DTV document format to generate a target document, i.e., DTV interactive contents (22).

11. The method of any of claims 6 to 10, wherein generating the DTV streams comprises:
converting the transfer streams and the DVD interactive streams into a digital storage media command and control (DSM-CC) standard to generate a DSM-CC message;
forming program and system information protocol (PSIP) information by using information related to a DTV stream conversion that is included in the reproduction control information (23), and PAT and PMT information;
converting the PSIP information into a PSIP private section; and
multiplexing the PSIP private section and the DSM-CC message with the MPEG-2 TS to generate the DTV streams.

12. An optical recording/reproducing apparatus for reproducing data recorded on an information recording medium on a DTV, the apparatus comprising:
a read-out unit (31) that reads out multi-streams (21), interactive contents (22), and reproduction control information (23) from the information storage medium that includes the multi-streams (21), the interactive contents (22), and the reproduction control information (23) having conversion information for converting the multi-streams (21) and/or the interactive contents (22) into DTV streams;
a first transcoder (34) that converts the multi-streams (21) read-out by the read-out unit (31) into transport streams appropriate to the DTV;
a second transcoder (35) that converts the interactive contents (22) read out by the read-out unit (31) into DTV interactive contents (22); and
a generator (36) that multiplexes the outputs of the first and second transcoders and generates DTV streams according to the reproduction control information (23) read out by the read-out unit (31).

13. The apparatus of claim 12 further comprising a digital interface (37) that interfaces the DTV streams generated by the generator (36) to transfer to the DTV.

14. The apparatus of claim 12 or 13, wherein the multi-streams (21) include an MPEG-2 PS, an MPEG-4 format stream, an MPEG-7 stream, and/or a Wavelet transform format stream.

15. The apparatus of claim 14, wherein the first transcoder (34) converts the MPEG-2 PS into an MPEG-2 TS.

16. The apparatus of claim 15, wherein the first transcoder (34) comprises:
a PS parse and demultiplex unit (42) that parses a pack and a PES in PS data read out by the read-out unit (31) to extract a video ES and an audio ES, an SCR from the pack, and PTS/DTS from a PES header;
a video rearranger (43) that searches a sequence start code and a picture start code in the video ES output from the PS parse and demultiplex unit (42) to generate a first recognition signal by access unit and to extract the PTS/DTS;
an audio rearranger (44) that obtains a frame size according to audio synchronization information in the audio ES output from the PS parse and demultiplex unit (42) to generate a second recognition signal by access unit and to extract the PTS;
a PES packetizer (47) that assigns the PES header to the outputs of the video rearranger (43) and the audio rearranger (44) by access unit according to the first and second recognition signals, and inserts proper time stamps, which are obtained based on the PTS/DTS extracted by the video rearranger (43);
a time controller (48) that determines a time alignment of an AV packet by using an SCR value following the SCR value of an initial pack provided from the PS parse and demultiplex unit (42) to generate a time control signal, and generates a PSI packet period signal and a PCR insertion period signal by sampling the PCR that is obtained using the SCR value;
an AV packet generator (50) that generates the AV packets from the output of the PES packetizer (47) according to the PCR insertion period signal;
a PAT packet generator (52) that generates PAT packets;
a PMT generator (53) that generates PMT packets;
a Null packet generator (51) that generates Null packets;
a TS packet scheduler (49) that generates a packet selection signal and schedules the AV packets, the PAT packets, the PMT packets, and the Null packets, wherein the time control of the AV packets is determined according to the presence of the time control signal, and the PAT packets and the PMT packets are alternately scheduled whenever the PSI packet period signals are generated; and
a TS multiplexer (54) that multiplexes the AV packets, the PAT packets, the PMT packets, and the Null packets according to the packet selection signal to output the MPEG-2 TS.

17. The apparatus of claim 16, wherein the priority of the TS packet scheduler (49) is AV packet > PAT packet and PMT packet > and Null packet.

18. The apparatus of any of claims 12 to 17, wherein the validation of a source document, i.e., the interactive contents (22), recorded on the information storage medium, is checked in the second transcoder (35), and if the source document is validated, comments, process indicators, document type declarations, start tags, end tags, named character references, numeric character references, marked sections, and parsed character data are converted into a DTV document format to generate a target document, i.e., DTV interactive contents (22).

19. The apparatus of claim 16 or 17, wherein the generator (36) converts the transport streams generated by the first transcorder and the DTV interactive streams generated by the second transcoder (35) into a DSM-CC standard to generate a DSM-CC message, forms PSIP information by using information on the DTV stream conversion, which is included in the reproduction control information (23), and the PAT and PMT information generated by the second transcoder (35), converts the PSIP information into a PSIP private section, and generates the DTV streams by multiplexing the PSIP private section and the DSM-CC message with the MPEG-2 TS output from the TS multiplexer (54).
